# EUROPÄISCHE PATENTSCHRIFT

(11) **EP 2 801 408 B1**
(45) Veröffentlichungstag und Bekanntmachung des Hinweises auf die Patenterteilung: **17.10.2018**
(21) Anmeldenummer: 14401049.3
(22) Anmeldetag: 05.05.2014
(51) Int. Cl.: B05B 1/16, B05B 1/30, B05B 15/50, F16K 11/16, F16K 31/524, B05B 1/20

(54) **Flüssigkeitsleitung mit zugeordnetem Düsenkörper**
Liquid line with an associated nozzle body
Conduite de liquide dotée d'un corps de tuyère associé

(30) Priorität: 07.05.2013 DE 102013104667
(43) Veröffentlichungstag der Anmeldung: 12.11.2014
(73) Patentinhaber: Amazonen-Werke H. Dreyer GmbH & Co. KG, 49205 Hasbergen (DE)
(72) Erfinder: Austermann, Stefan, 48291 Telgte (DE); Dembeck, Achim, 49191 Belm (DE)

(56) Entgegenhaltungen:
- EP-A2- 2 145 981
- DE-A1-102010 036 437

## Beschreibung

Die Erfindung betrifft eine Flüssigkeitsleitung mit zugeordnetem Düsenkörper gemäß des Oberbegriffes des Patentanspruches 1.

Eine derartige Flüssigkeitsleitung mit zugeordnetem Düsenkörper ist in der DE 10 2010 036 437 A1 beschrieben. Hier zweigt von der Flüssigkeitsleitung in einem Abzweigungsbereich eine Zweigleitung zu der zumindest einen Ausbringdüse des Düsenkörpers ab. Der Abzweigleitung ist zumindest ein Absperrelement aufweisendes Absperrventil zugeordnet. Eine Teilmenge des Flüssigkeitsstromes zweigt zur Ausbringdüse ab. Das Absperrelement wird im wesentlichen nur umspült, wenn das Absperrelement den Durchfluss in der Zweigleitung zu der Ausbringdüse frei gibt. Insbesondere wenn das Absperrelement den Durchfluss in der Zweigleitung zu der Ausbringdüse absperrt, lagern sich in der Flüssigkeit, wie beispielsweise Pflanzenschutzmittellösungen, befindliche Partikel ab. Durch die Ablagerung der Partikel insbesondere im Absperrbereich der Absperrelemente kommt es zu Veränderungen der Ausbringmenge und zu Problemen beim Absperren der Zweigleitung durch die Absperrelemente.

Der Erfindung liegt die Aufgabe zugrunde, in einfacher Weise zumindest bei der Absperrung der Zweigleitung durch die Absperrelemente eine behindernde Ablagerung von sich in der auszubringenden Flüssigkeit, wie beispielsweise Pflanzenschutzmittellösungen, befindliche Partikel, zu vermeiden.

Diese Aufgabe wird erfindungsgemäß dadurch gelöst, dass in jedem Abzweigungsbereich zu einer Zweigleitung zumindest eine in den freien Querschnitt der Flüssigkeitsleitung hineinragende und zumindest eine stirnseitige Trennkante aufweisende Zwischenwand angeordnet ist, dass zwischen der zumindest einen Trennkante und der Leitungswand der Flüssigkeitsleitung zumindest eine zu der zumindest einen Abzweigleitung führende Öffnung sich befindet, dass auf jedem der stirnseitigen Trennkante abgewandten Ende jeder Zwischenwand zumindest eine weitere die Abzweigleitung mit der Flüssigkeitsleitung verbindende Öffnung angeordnet ist.

Infolge dieser Maßnahme wird quasi ein Teilstrom durch die eine Trendkante aufweisende Zwischenwand vom Flüssigkeitsstrom abgeschnitten und zwangsweise in die Zweigleitung abgezweigt.

Weiterhin wird die Strömung des Flüssigkeitsstromes im Bereich der Absperrelemente soweit erhöht, dass in allen Einsatzfällen immer eine ausreichende Strömung des Flüssigkeitsstromes im Absperrbereich herrscht, damit sich keine Partikel aus dem Flüssigkeitsstrom in die Funktionsweise des Absperrelementes behindernder Weise ablagern können.

So wird immer eine ausreichend große Flüssigkeitsströmung im Absperrbereich erreicht.

Um einen ausreichend großen Flüssigkeitsstrom in sicherer Weise zu entfernt von dem Abzweigbereich angeordneten Absperrelementen zu erreichen, ist vorgesehen, dass in dem Abzweigungsbereich zumindest eine in den freien Querschnitt der Flüssigkeitsleitung hineinragende und zumindest eine stirnseitige Trennkante aufweisende Zwischenwand angeordnet ist, dass zwischen der zumindest einen Trennkante und der Leitungswand der Flüssigkeitsleitung zumindest eine zu der zumindest einen Abzweigleitung führende Öffnung sich befindet, dass auf dem der stirnseitigen Trennkante abgewandten Ende der Zwischenwand zumindest eine weitere die Abzweigleitung mit der Flüssigkeitsleitung verbindende Öffnung angeordnet ist. Hierdurch wird quasi ein Teilstrom durch die eine Trendkante aufweisende Zwischenwand vom Flüssigkeitsstrom abgeschnitten und zwangsweise in die Zweigleitung abgezweigt.

Um eine gezielte Führung des Flüssigkeitsstromes in der ab Zweigleitung zu der jeweiligen Ausbringdüse zu erreichen, ist vorgesehen, dass in der Abzweigleitung zumindest eine an der stirnseitigen Trennkante beginnende und zu der zu der jeweiligen Ausbringdüse des Düsenkörpers den Flüssigkeitsstrom leitende Führungswand angeordnet ist.

Damit der überschüssige Flüssigkeitsstrom, welcher nicht der Ausbringdüse zugeführt wird, wieder in die Flüssigkeitsleitung zurückleiten zu können, ist vorgesehen, dass zumindest eine Öffnung an der stirnseitigen Trennkante der Zwischenwand mit zumindest einer weiteren Öffnung an dem Ende der Zwischenwand in Durchflussverbindung steht. Hierdurch wird eine zwangsweise Umspülung der Absperrelemente sichergestellt.

Bei einem als Mehrfachdüsenkörper ausgebildeten Düsenkörper, der über an einer Betätigungsscheibe angeordnete Schaltnocken betätigbare und den an dem Gehäuse des Mehrfachdüsenkörpers angeordnete Ausbringdüsen zugeordnete Absperrventile aufweist, ist vorgesehen, dass zwischen den beiden Seitenflächen der Betätigungsscheibe und den jeweils benachbarten Gehäusewandungen ein von dem Flüssigkeitsstrom durchströmbarer Spaltbereich angeordnet ist, dass die Öffnungen an der Stirnseite und dem Ende der Zwischenwand durch den Spaltbereich zwischen den beiden Seitenflächen der Betätigungsscheibe und den jeweils benachbarten Gehäusewandungen miteinander verbunden sind. Hierdurch wird sichergestellt, dass sich auch in dem Spaltbereich keine Partikel aus dem Flüssigkeitsstrom ablagern können.

Um den auszubringende Flüssigkeitsstrom in gezielter Weise zu der Ausbringdüse zuleiten, ist vorgesehen, dass durch die zumindest eine den Flüssigkeitsstrom leitende Führungswand der Flüssigkeitsstrom zu der zumindest einen an dem Düsenkörper angeordneten Ausbringdüse leitbar ist.

Bei einem mehrfach Düsenkörper ist vorgesehen,, dass die Führungswand als auf der der Abzweigleitung abgewandten Seite der Zwischenwand vorzugsweise kurvenartig verlaufend in Richtung der Ausbringdüse verlaufender Wulst ausgebildet ist. Durch die Wulst wird der Flüssigkeitsstrom aufgeteilt und der jeweiligen Ausbringdüse gezielt zugeleitet.

Weitere Einzelheiten der Erfindung sind den übrigen Unteransprüchen, der Beispielsbeschreibung und den Zeichnungen zu entnehmen. Hierbei zeigen
- Fig. 1: den Mehrfachdüsenkörper in perspektivischer Ansicht,
- Fig. 2: den Mehrfachdüsenkörper in der Seitenansicht,
- Fig. 3: den Mehrfachdüsenkörper im Bereich der Flüssigkeitsleitung in der Ansicht III - III,
- Fig. 4: den Mehrfachdüsenkörper im Bereich der Flüssigkeitsleitung und im Abzweigbereich der Abzweigleitung in der Ansicht IV - IV,
- Fig. 5: den Mehrfachdüsenkörper in der Vorderansicht,
- Fig. 6: den Mehrfachdüsenkörper in der Ansicht VI - VI,
- Fig. 7: den Mehrfachdüsenkörper in der Seitenansicht,
- Fig. 8: den Mehrfachdüsenkörper in der Ansicht VIII - VIII,
- Fig. 9: den Mehrfachdüsenkörper in der Ansicht IX - IX und
- Fig. 10: den Mehrfachdüsenkörper in der Ansicht X - X mit einer anderen Schaltstellung der Betätigungsscheibe.

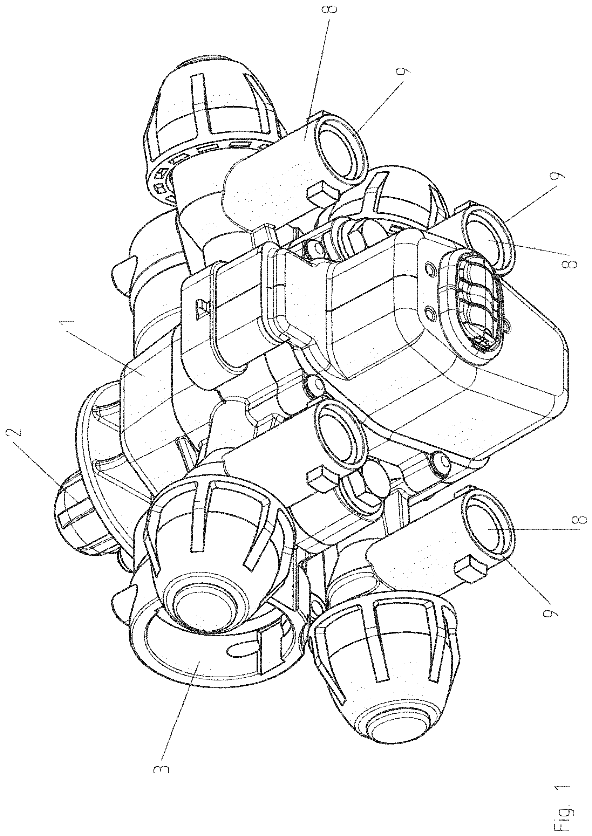

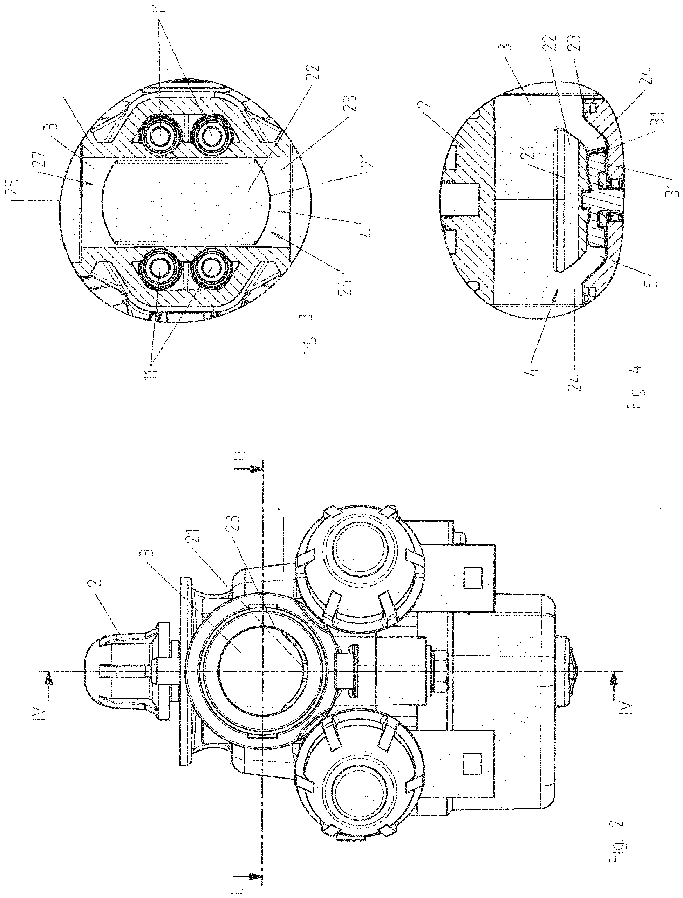

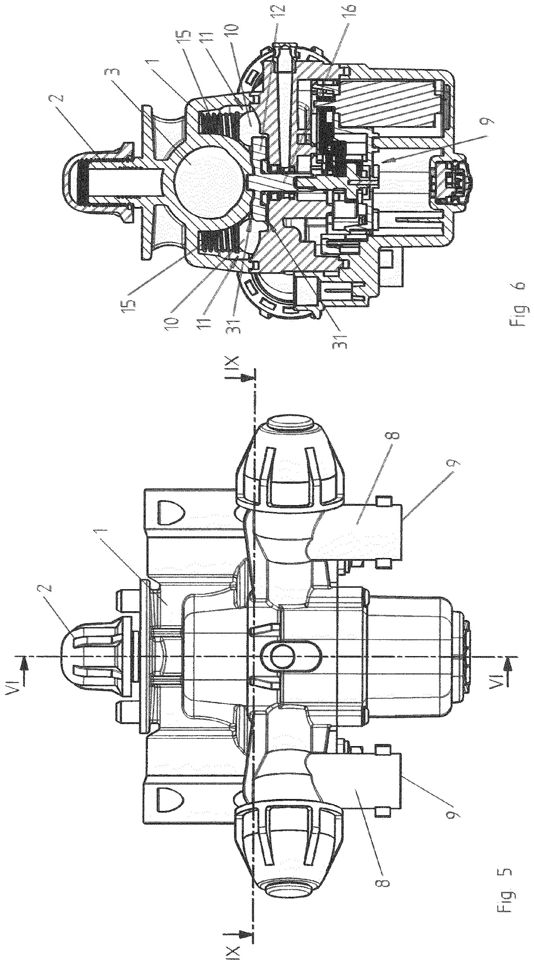

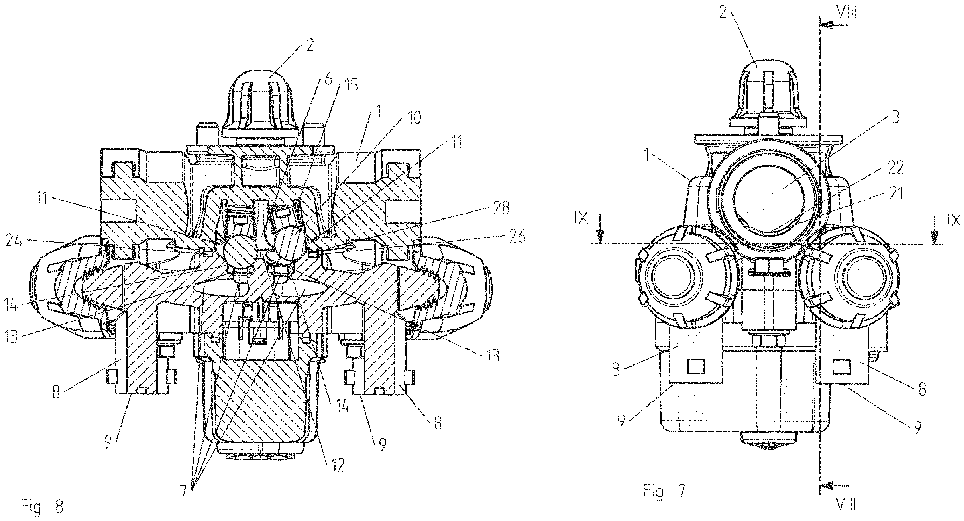

Der Mehrfachdüsenkörper gemäß den Fig. 1 bis 10 weist das Gehäuse 1 auf. An dem Gehäuse ist das Befestigungsmittel 2 angeordnet, mit welchem der Mehrfachdüsenkörper an Rahmenelementen, Verteilergestänge, etc. befestigt werden kann. Im oberen Bereich des Gehäuses 1 des Mehrfachdüsenkörpers ist ein Teil 3 der Flüssigkeitsleitung, an welcher der Mehrfachdüsenkörper anschließbar ist, angeordnet. Über diese Flüssigkeitsleitung, die beispielsweise an einem Verteilergestänge einer landwirtschaftlichen Feldspritze angeordnet ist, ist dem jeweiligen Mehrfachdüsenkörper die auszubringende Flüssigkeit zuzuführen.

Die Flüssigkeitsleitung 3 ist mit der in dem Gehäuse 1 in einem Abzweigbereich 4 angeordneten Abzweigleitung 5 verbunden. Die Abzweigleitung 5 mündet in dem in dem Gehäuse 1 angeordneten Verteilerraum 6 aus. Von diesem Verteilerraum 6 führen, gemäß des Ausführungsbeispieles, vier Verbindungsleitungen 7, die die Verlängerung der Abzweigleitung 5 bilden, zu in dem Gehäuse 1 angeordneten Ausbringleitungen 8, an deren Enden 9 in nicht dargestellter Weise mittels Überwurfmuttern Ausbringdüsen in bekannter Weise angeordnet sind.

Die Verbindungsleitungen 7 sind im Bereich des Verteilerraumes 6 mittels als Absperrelemente 10 aufweisende Absperrventile 11 abzusperren. Über diese Absperrelemente 10 sind die Verbindungsleitungen 7 mit der Zuleitung 5 wahlweise verbindbar und/oder ihr gegenüber absperrbar. Die Absperrelemente 10 sind über schaltbare Betätigungselemente 12 betätigbar und somit in die jeweilige Absperr- oder Durchflussposition zu bringen.

Die Absperrventile 11 weisen jeweils einen in dem Gehäuse 1 angeordneten Ventilsitz 13, dem jeweils ein Dichtring 14 zugeordnet ist, auf. Die Absperrelemente 10 sind kugelartig, im Ausführungsbeispiel als Kugeln ausgebildet. Wenn die Kugeln 10 sich im Ventilsitz 13 befinden, wirken sie in dieser Absperrstellung mit dem Dichtring 14 des Ventilsitzes 13 abdichtend zusammen. Den Kugeln 10 sind Druckfedern 15 zugeordnet, mittels welchem sie in Richtung des Ventilsitzes 13 gedrückt werden.

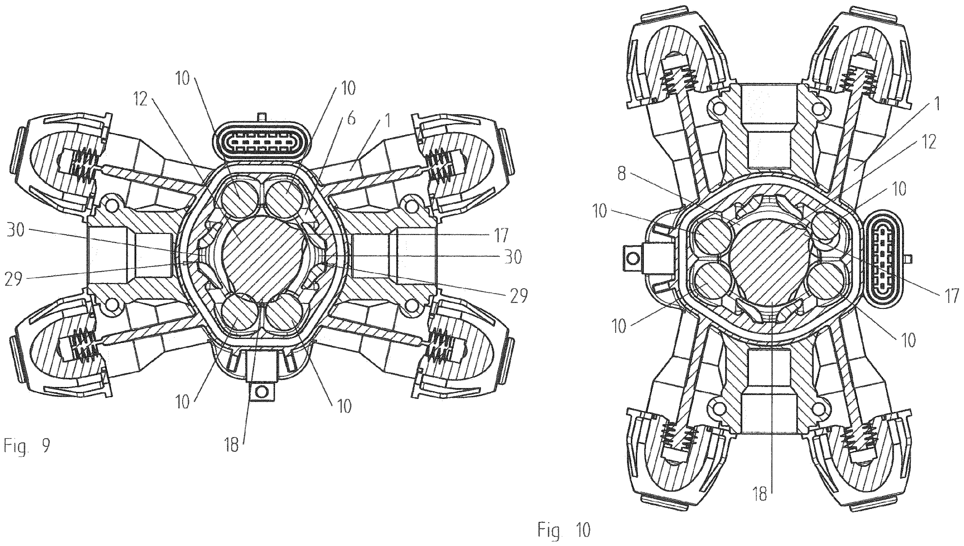

Das schaltbare Betätigungselement 12 ist scheibenartig ausgebildet und drehfest mit einer in dem Gehäuse 1 gelagerten Schaltwelle 16 verbunden. Das Betätigungselement 12 weist mehrere Schaltnocken 17, 18, wie die Fig. 9 und 10 zeigen, auf. Gemäß des Ausführungsbeispieles weist das Betätigungselement 12 zwei Schaltnocken 17, 18 auf. Die Schaltwelle 16 des Betätigungselementes 12 ist mit einem motorischen Stellelement 19, welches als Elektromotor ausgebildet ist, drehfest verbunden und somit über das motorische Stellelement um seine Drehachse verdrehbar.

Einer der beiden Schaltnocken 17 ist so ausgestaltet, dass er nur ein als Kugel 10 ausgebildetes Ventilelement aus dem Ventilsitz 13 drücken kann, so dass der Durchfluss zu einer Verbindungsleitung 7 frei gegeben ist. Der andere der beiden Schaltnocken 18 ist so ausgestaltet, dass er zwei nebeneinander angeordnete als Kugeln 10 ausgebildete Absperrelemente gleichzeitig in eine den Durchfluss in die jeweiligen Verbindungsleitungen 7 freigebenden Stellung bewegen kann, das heißt, dass er gleichzeitig zwei als Kugeln 10 ausgebildete Ventilelemente aus ihren Ventilsitzen 13 drücken kann.

Das Betätigungselement 12 mit den beiden Schaltnocken 17, 18 ist in unterschiedliche Positionen verdrehbar, wie dies für einige mögliche Positionen in den Fig. 9 und 10 dargestellt ist. Wie hieraus ersichtlich ist, werden je nach Schaltstellung des Betätigungselementes 12 der Durchfluss für keine, eine oder mehrere Verbindungsleitungen 7 zu den Ausbringdüsen führenden Ausbringleitungen 8 freigegeben. Somit können wahlweise keiner, einer oder mehrerer Verbindungsleitungen 7 und somit Ausbringdüsen in unterschiedlicher Kombination die auszubringende Flüssigkeit zugeleitet werden.

In dem Abzweigungsbereich 4 ist eine in den freien Querschnitt der Flüssigkeitsleitung 3 hineinragende und die stirnseitige Trennkante 21 aufweisende Zwischenwand 22 angeordnet. Zwischen der Trennkante 21 und der Leitungswand 23 der Flüssigkeitsleitung 3 befindet sich eine zu der Abzweigleitung 5 führende Öffnung 24. Desweiteren ist auf dem der stirnseitigen Trennkante 21 abgewandten Ende 25 der Zwischenwand 22 eine weitere die Abzweigleitung 5 mit der Flüssigkeitsleitung 3 verbindende Öffnung 26 angeordnet. Die Öffnung 27 an der stirnseitigen Trennkante 21 der Zwischenwand 22 steht mit der weiteren Öffnung 24 an dem Ende 25 der Zwischenwand 22 in Durchflussverbindung. Somit ist von der Abzweigleitung 5 in dem Bereich der Absperrelemente 10 eine weitere mit der Flüssigkeitsleitung 3 verbundene und eine Öffnung 24 zur Flüssigkeitsleitung 3 aufweisende Zwischenleitung 28 zugeordnet.

In der Abzweigleitung 5 st eine an der stirnseitigen Trennkante 21 beginnende und zu der zu der jeweiligen Ausbringdüse des Düsenkörpers den Flüssigkeitsstrom leitende Führungswand 29 angeordnet. Die Führungswand 29 ist als auf der der Abzweigleitung 5 abgewandten Seite der Zwischenwand 22 kurvenartig verlaufend in Richtung der Ausbringdüse verlaufender Wulst 30 ausgebildet.

Zwischen den beiden Seitenflächen der Betätigungsscheibe 12 und den jeweils benachbarten Gehäusewandungen ist ein von dem Flüssigkeitsstrom durchströmbarer Spaltbereich 32 angeordnet. Die Öffnungen 24 und 28 an der Stirnseite und dem Ende der Zwischenwand 22 sind durch den Spaltbereich 32 zwischen den beiden Seitenflächen der Betätigungsscheibe 12 und den jeweils benachbarten Gehäusewandungen miteinander verbunden.

Durch die den Flüssigkeitsstrom leitende Führungswand 30 wird der Flüssigkeitsstrom zu den an dem Düsenkörper angeordneten Ausbringdüse zugeleitet.

Durch die vorbeschriebene Anordnung der Absperrelemente 10 liegen diese im Bereich des Flüssigkeitsstromes und werden von einem Flüssigkeitsstrom umströmt und/oder umspült, der größer als die über die Ausbringdüse ausgebrachte Flüssigkeitsmenge ist.

## Patentansprüche

1. Flüssigkeitsleitung (3) mit zugeordnetem Düsenkörper, wobei von der zumindest eine Leitungswand aufweisenden Flüssigkeitsleitung (3) in einem Abzweigungsbereich (4) eine Abzweigleitung (5) zu der zumindest einen Ausbringdüse des Düsenkörpers abzweigt, **dadurch gekennzeichnet, dass** in je dem Abzweigungsbereich (4) zu einer Abzweigleitung (5) zumindest eine in den freien Querschnitt der Flüssigkeitsleitung (3) hineinragende und zumindest eine eine stirnseitige Trennkante (21) aufweisende Zwischenwand (22) angeordnet ist, dass zwischen der zumindest einen Trennkante (21) und der Leitungswand (23) der Flüssigkeitsleitung (3) zumindest eine zu der zumindest einen Abzweigleitung (5) führende Öffnung (24) sich befindet, dass auf jedem der stirnseitigen Trennkante (21) abgewandten Ende (25) jeder Zwischenwand (22) zumindest eine weitere die Abzweigleitung (5) mit der Flüssigkeitsleitung (3) verbindende Öffnung (26) angeordnet ist.

2. Flüssigkeitsleitung nach Anspruch 1, **dadurch gekennzeichnet, dass** in der Abzweigleitung (5) zumindest eine an der stirnseitigen Trennkante (21) beginnende und zu der zu der jeweiligen Ausbringdüse des Düsenkörpers den Flüssigkeitsstrom leitende Führungswand (29)angeordnet ist.

3. Flüssigkeitsleitung nach zumindest einem der vorstehenden Ansprüche, **dadurch gekennzeichnet, dass** zumindest eine Öffnung (27) an der stirnseitigen Trennkante (21) der Zwischenwand (22) mit zumindest einer weiteren Öffnung (24) an dem Ende (25) der Zwischenwand (22) in Durchflussverbindung steht.

4. Flüssigkeitsleitung nach zumindest einem der vorstehenden Ansprüche, wobei der Düsenkörper als Mehrfachdüsenkörper ausgebildet ist und über an einer Betätigungsscheibe angeordnete Schaltnocken betätigbare und den an dem Gehäuse des Mehrfachdüsenkörpers angeordnete Ausbringdüsen zugeordnete Absperrventile aufweist, **dadurch gekennzeichnet, dass** zwischen den beiden Seitenflächen der Betätigungsscheibe (12) und den jeweils benachbarten Gehäusewandungen ein von dem Flüssigkeitsstrom durchströmbarer Spaltbereich (31) angeordnet ist, dass die Öffnungen an der Stirnseite und dem Ende der Zwischenwand (22) durch den Spaltbereich (31) zwischen den beiden Seitenflächen der Betätigungsscheibe (12)und den jeweils benachbarten Gehäusewandungen miteinander verbunden sind.

5. Flüssigkeitsleitung nach zumindest einem der vorstehenden Ansprüche, **dadurch gekennzeichnet, dass** durch die zumindest eine den Flüssigkeitsstrom leitende Führungswand (29) der Flüssigkeitsstrom zu der zumindest einen an dem Düsenkörper angeordneten Ausbringdüse leitbar ist.

6. Flüssigkeitsleitung nach zumindest einem der vorstehenden Ansprüche, **dadurch gekennzeichnet, dass** die Führungswand (29) als auf der der Abzweigleitung (5) abgewandten Seite der Zwischenwand (22) vorzugsweise kurvenartig verlaufend in Richtung der Ausbringdüse verlaufender Wulst (30) ausgebildet ist.

7. Flüssigkeitsleitung nach zumindest einem der vorstehenden Ansprüche, **dadurch gekennzeichnet, dass** die Absperrelemente (10) in einem Bereich des Flüssigkeitsstromes liegen und von einem Flüssigkeitsstrom umströmt und/oder umspült werden, der größer als die über die Ausbringdüse ausgebrachte Flüssigkeitsmenge ist.

8. Flüssigkeitsleitung nach zumindest einem der vorstehenden Ansprüche, **dadurch gekennzeichnet, dass** von der Abzweigleitung (5) in dem Bereich der Absperrelemente (10) eine weitere mit der Flüssigkeitsleitung (3) verbundene und eine Öffnung zur Flüssigkeitsleitung (3) aufweisende Zwischenleitung zugeordnet ist.

9. Flüssigkeitsleitung nach zumindest einem der vorstehenden Ansprüche, **dadurch gekennzeichnet, dass** von der zumindest eine Leitungswand aufweisenden Flüssigkeitsleitung in einem Abzweigungsbereich eine Zweigleitung zu der zumindest einen Ausbringdüse des Düsenkörpers abzweigt, dass der Abzweigleitung zumindest ein Absperrelement aufweisendes Absperrventil zugeordnet ist, wobei eine Teilmenge des Flüssigkeitsstromes in der Flüssigkeitsleitung in die Zweigleitung zur Ausbringdüse abzweigt,

## Claims

1. Liquid line (3) having an associated nozzle body, a branch line (5) to the at least one ejection nozzle of the nozzle body branching off in a branching region (4) from the liquid line (3) which has at least one line wall, **characterized in that** at least one intermediate wall (22) which protrudes into the free cross section of the liquid line (3) and has at least one end-side separating edge (21) is arranged in in each case the branching region (4) to a branch line (5), **in that** at least one opening (24) which leads to the at least one branch line (5) is situated between the at least one separating edge (21) and the line wall (23) of the liquid line (3), and **in that** at least one further opening (26) which connects the branch line (5) to the liquid line (3) is arranged on each end (25) of each intermediate wall (22), which end (25) faces away from the end-side separating edge (21).

2. Liquid line according to Claim 1, **characterized in that** at least one guide wall (29) which begins at the end-side separating edge (21) and guides the liquid flow to the respective ejection nozzle of the nozzle body is arranged in the branch line (5).

3. Liquid line according to at least one of the preceding claims, **characterized in that** at least one opening (27) on the end-side separating edge (21) of the intermediate wall (22) is throughflow-connected to at least one further opening (24) at the end (25) of the intermediate wall (22).

4. Liquid line according to at least one of the preceding claims, the nozzle body being configured as a multiple nozzle body and having shut-off valves which can be actuated via switching cams arranged on an actuating disc and which are assigned to the ejection nozzles arranged on the housing of the multiple nozzle body, **characterized in that** a gap region (31) which can be flowed through by the liquid flow is arranged between the two side faces of the actuating disc (12) and the respective adjoining housing walls, and **in that** the openings on the end side and the end of the intermediate wall (22) are connected to one another by way of the gap region (31) between the two side faces of the actuating disc (12) and the respective adjoining housing walls.

5. Liquid line according to at least one of the preceding claims, **characterized in that** the liquid flow can be guided, by way of the at least one guide wall (29) which guides the liquid flow, to the at least one ejection nozzle which is arranged on the nozzle body.

6. Liquid line according to at least one of the preceding claims, **characterized in that** the guide wall (29) is configured as a bead (30) which runs in the direction of the ejection nozzle in a manner which preferably runs in a curve on that side of the intermediate wall (22) which faces away from the branch line (5).

7. Liquid line according to at least one of the preceding claims, **characterized in that** the shut-off elements (10) lie in a region of the liquid flow and are flowed around and/or flushed around by a liquid flow which is greater than the liquid quantity which is ejected via the ejection nozzle.

8. Liquid line according to at least one of the preceding claims, **characterized in that** a further intermediate line which is connected to the liquid line (3) and has an opening to the liquid line (3) is assigned by the branch line (5) in the region of the shut-off elements (10).

9. Liquid line according to at least one of the preceding claims, **characterized in that**, in a branching region, a branch line to the at least one ejection nozzle of the nozzle body branches off from the liquid line which has at least one line wall, and **in that** the branch line is assigned at least one shut-off valve which has a shut-off element, a part quantity of the liquid flow in the liquid line branching off into the branch line to the ejection nozzle.

## Revendications

1. Conduit à liquide (3) pourvu d'un corps de buse associé, à partir du conduit à liquide (3) comportant au moins une paroi de conduit, dans une zone de dérivation (4), un conduit de dérivation (5) dérivant vers l'au moins une buse d'évacuation du corps de buse, **caractérisé en ce que** dans chaque zone de dérivation (4) vers un conduit de dérivation (5) est placée au moins une paroi intermédiaire (22) frontale saillant à l'intérieur de la section transversale du conduit à liquide (3) et comportant au moins une arête de séparation (21) frontale, **en ce qu'**entre l'au moins une arête de séparation (21) et la paroi de conduit (23) du conduit à liquide (3) se trouve au moins une ouverture (24) conduisant vers l'au moins un conduit de dérivation (5), **en ce que** sur chaque extrémité (25) opposée à l'arête de séparation (21) frontale de chaque paroi intermédiaire (22) est placée au moins une ouverture (26) supplémentaire reliant le conduit de dérivation (5) avec le conduit à liquide (3).

2. Conduit à liquide selon la revendication 1, **caractérisé en ce que** dans le conduit de dérivation (5) est placée au moins une paroi de guidage (29) commençant sur l'arête de séparation (21) frontale et conduisant le flux de liquide vers la buse d'évacuation concernée du corps de buse.

3. Conduit à liquide selon au moins l'une quelconque des revendications précédentes, **caractérisé en ce qu'**au moins une ouverture (27) sur l'arête de séparation (21) frontale de la paroi intermédiaire (22) est en liaison de débit avec au moins une ouverture (24) supplémentaire sur l'extrémité (25) de la paroi intermédiaire (22).

4. Conduit à liquide selon au moins l'une quelconque des revendications précédentes, le corps de buse étant conçu sous la forme d'un corps de buse multiple et comportant des soupapes de blocage actionnables par l'intermédiaire de cames de commutation placées sur un disque de manoeuvre et associées aux buses d'évacuation placées sur le boîtier du corps de buses multiples, **caractérisé en ce qu'**entre les deux faces latérales du disque de manoeuvre (12) et les parois de boîtier respectivement voisines est placée une zone de fente (31) susceptible d'être traversée par le flux de liquide, **en ce que** les ouvertures sur la face frontale et sur l'extrémité de la paroi intermédiaire (22) sont reliées les unes aux autres par la zone de fente (31) entre les deux surfaces latérales du disque de manoeuvre (12) et les parois de boîtier respectivement voisines.

5. Conduit à liquide selon au moins l'une quelconque des revendications précédentes, **caractérisé en ce qu'**à travers l'au moins une paroi de guidage (29) conduisant le flux de liquide, le flux de liquide est susceptible d'être conduit vers l'au moins une buse d'évacuation placée sur le corps de buse.

6. Conduit à liquide selon au moins l'une quelconque des revendications précédentes, **caractérisé en ce qu'**en tant que face de la paroi intermédiaire (22) opposée au conduit de dérivation (5), la paroi de guidage (29) est conçue en tant que bourrelet (30) s'écoulant de préférence en virages dans la direction de la buse d'évacuation.

7. Conduit à liquide selon au moins l'une quelconque des revendications précédentes, **caractérisé en ce que** les éléments de blocage (10) se situent dans une zone du flux de liquide et sont entourés et/ou baignés par un flux de liquide qui est plus important que la quantité de liquide évacuée par la buse d'évacuation

8. Conduit à liquide selon au moins l'une quelconque des revendications précédentes, **caractérisé en ce que** dans la zone des éléments de blocage (10), un conduit intermédiaire supplémentaire relié avec le conduit à liquide (3) et comportant une ouverture sur le conduit à liquide (3) est associé au von der conduit de dérivation (5).

9. Conduit à liquide selon au moins l'une quelconque des revendications précédentes, **caractérise en ce qu'**à partir du conduit à liquide comportant au moins une paroi de conduit, dans une zone de dérivation, un conduit de dérivation dérive vers l'au moins une buse de dérivation du corps de buse, **en ce qu'**au conduit de dérivation est associée au moins une soupape de blocage comportant un élément de blocage, une quantité partielle du flux de liquide dans le conduit à liquide dérivant dans le conduit de dérivation vers la buse d'évacuation.
